# EUROPEAN PATENT SPECIFICATION

(11) **EP 3 296 305 B1**
(45) Date of publication and mention of the grant of the patent: **20.11.2019**
(21) Application number: 16382433.7
(22) Date of filing: 16.09.2016
(51) Int. Cl.: C07F 11/00, A47L 15/42, D06F 35/00, B01J 37/02, B01J 27/188

(54) **HOUSEHOLD APPLIANCE WITH AN ODOUR REMOVAL SYSTEM AND METHOD FOR OPERATING THE SAME**
HAUSHALTSGERÄT MIT EINEM GERUCHSBESEITIGUNGSSYSTEM UND VERFAHREN ZUM BETRIEB DAVON
APPAREIL MÉNAGER AVEC SYSTÈME D'ÉLIMINATION D'ODEURS ET SON PROCÉDÉ DE FONCTIONNEMENT

(43) Date of publication of application: 21.03.2018
(73) Proprietor: BSH Hausgeräte GmbH, 81739 München (DE)
(72) Inventor: Artal Lahoz, Maria Carmen, 50007 Zaragoza (ES); Bischof, Andreas, 10407 Berlin (DE); Bunuel Magdalena, Miguel Angel, 50017 Zaragoza (ES); Hanau, Andreas, 12359 Berlin (DE); Lazaro Villarroya, Guillermo Alberto, 50005 Zaragoza (ES); Mischo, Horst, 54295 Trier (DE); Sanz Naval, Javier, 50193 Zaragoza (ES); Schepers, Klaus, 35619 Braunfels (DE)

(56) References cited:
- EP-A1- 2 765 136
- WO-A1-2014/122225
- WO-A1-2014/154432
- DE-A1-102011 083 572
- Jeffrey G. Lundin ET AL: "Nature of Polyoxometalate Intramolecular Coordination to Quaternary Ammonium Salts from Paramagnetic Relaxation Enhancement", JOURNAL OF PHYSICAL CHEMISTRY C, vol. 120, no. 31, 15 July 2016 (2016-07-15), pages 17767-17776, XP055516591, ISSN: 1932-7447, DOI: 10.1021/acs.jpcc.6b05122

## Description

The invention relates to a household appliance with an odour removal system containing odour removal means, and a method for operating the same.

Household appliances can come into contact with dust, dirt, food, humidity or human skin.

This may lead to bad odours, since microorganisms may deposit on the household appliance and may proliferate. Namely, bad odours can be probably associated to a microbiological origin as possible cause. It is known that as a result of the metabolism of microorganisms, molecules are generated which have functional groups that are responsible for bad odours (herein abbreviated as "odours"). The growth of microorganisms within different household appliances is promoted by suitable temperature and moisture conditions and the presence of organic matter which derives in particular from food remainders as nourishment. Additionally, chemical processes as such can lead to the formation of molecules that are responsible for bad odours. For example, food remains can undergo oxidation processes which lead also to the generation of molecules containing functional groups responsible for bad odours. These compounds are often termed volatile organic compounds (VOCs). Instead of being present in the air within the household appliance, the VOCs can be contained in liquids present within the household appliance.

The VOCs can give rise to several problems. In general, the presence of bad odours is related to a bad hygiene feeling. In dishwashers, for example, a user might encounter bad odours. In washing machines or dryers, bad odours could be accumulated in clothes. In refrigerators, a specific problem might arise due to a mixture of odours and flavours for different types of food.

The current solutions to remove bad odours are based on the use of chemical products for masking the odours or on the use of for example activated carbon filters to adsorb odours. For example, a chemical product is used to mask odours in a dishwasher. Activated carbon filter is used for example to absorb odours in fridges. It is also known to provide refrigerators with a system that produces ozone in order to remove odour and also to increase the storage life of food stored in the refrigerator.

These methods have however one or more disadvantages in that they cannot remove odour totally, have not enough durability such that the replacement of deodorizing chemical compounds or their regeneration is required after some time. Moreover, the known solutions often require additional costs and/or efforts from a consumer.

These problems are especially of significance in water-bearing household appliances, since water assists in the decomposition of organic matter by microorganisms. All water-bearing household appliances have in common that in the humid and warm atmosphere, in particular at sites that are difficult to access, dirt can arise and accumulate. This dirt may be a good nutrient medium for microorganisms such as bacteria and fungi. As a result odours can arise.

A problem of odour exists particularly where water remains in a household appliance after its prescribed use. Therefore, for example in a laundry treatment device as for example a washing machine, when a water reservoir is used or on frequent use of washing programs with cold liquors, during long phases of non-use with the door closed or under unfavorable placing conditions, chemical compounds creating bad odours can form and accumulate. Pathological effects may even occur. Bad odours stem particularly from areas of washing machines in which water is present for long periods, i.e. during phases of non-use. Such areas include poorly ventilated areas such as ribs, pockets, folds in seals, water inflows and outflows and, most particularly, water reservoirs which serve to store the greywater arising in the washing and rinsing process for re-use in a later washing or rinsing process. It is therefore desirable to deodorize the water and/or air in a household appliance and to prevent the formation of new odours.

Other household appliances that may tend to the formation of odours are for example kitchen hoods or vacuum cleaners.

In order to maintain a hygienically impeccable state in a household appliance such that odours cannot be formed, various methods are currently being used. In particular, various measures for removing and/or preventing biofilms are known from the prior art. In water-bearing household appliances, sometimes machine cleaning programs are offered which remove built-up of dirt at high temperatures with the assistance of washing agents and sometimes with increased liquor levels and/or at raised drum rotations speeds, i.e. with an increased input of mechanical energy. Also known is the use of ozone to remove organic dirt.

Among the best known methods, the use of antimicrobial active ingredients in the surfaces of the household appliance, for example silver ions, is envisaged. These ingredients have however the disadvantage that they are gradually removed from the surface and are thus depleted. Moreover, when Ag+ or Cu+ ions are used in water-bearing household appliances, for example in the washing liquor and on the surfaces of the materials coming into contact with the washing liquor, detrimental effects with regard to groundwater and waterway pollution also arise. However, if these active ingredients are not washed out from a carrier material in the surfaces of the household appliance, their efficacy is mostly small such that over a long term microorganisms and even biofilms are being formed on the surface and negatively affect the hygienic state of the household appliance and create odours.

Photocatalytic methods are known, for example, the use of catalytically effective compounds, in particular titanium dioxide coatings for deodorizing, disinfecting and cleaning. In this process, the catalyst needs to be often activated by means of UV radiation. These compounds support the oxidative modification or destruction of microorganisms, such that they are removed in the best case in total by oxidation. Often this method works however only insufficiently, in particular if UV light is required in addition for the oxidation.

A disadvantage of these known methods and measures is the high energy usage and the sometimes high apparatus and/or operating costs for achieving remarkable effects. In some methods, potentially health-endangering agents, for example ozone or UV radiation, are used so that additional safety measures are required.

The use of polyoxometalates in various fields is known, for example, in analytical and clinical chemistry, in catalysis (including photocatalysis), in biochemistry (inhibition of electron transfer processes), in medicine (antitumor and antiviral activity) and in the manufacturing of integrated circuits.

The publication EP 1 439 261 A2 describes a polyoxometalate-modified fabric or an article comprising the polyoxometalate-modified fabric, comprising a fabric and at least one broadly defined polyoxometalate. Disclosed is moreover the use of the fabric for removing contaminants selected from aliphatic nitrogen compounds; sulfur containing compounds; halogenated compounds and aliphatic oxygenated compounds from the fabric. Further disclosed is the use for removing microbial life from the gas or liquid phase.

The prior art in this area has however the shortcoming that the materials are effective only through stoichiometric physisorption or chemisorption processes based on acid-base, ion pairing (salt formation) and/or oxidation reduction reactions. Because this mode of action is stoichiometric and not catalytic, it is not very practical and economical.

The publication US 2004/0185116 A1 discloses a polyoxometalate topical composition for removing a contaminant from an environment, comprising a topical carrier and at least one broadly defined polyoxometalate.

The publication WO 2005/021435 A2 discloses a composition, comprising a metal nitrate selected from d-block metal nitrates and f-block metal nitrates, and a metal salt having weakly bound counter anions, wherein the metal of the metal salt is selected from a d-block metal and an f-block metal. In an embodiment, wherein the composition further comprises a polyoxometalate, a method of removing a contaminant is described wherein the composition is contacted with the contaminant.

The publication US 2005/0159307 A1 describes a composition for degrading a contaminant, comprising a polyoxometalate (POM)/cationic silica material.

The publication US 2006/0283323 A1 describes a method for purification of a gaseous stream having at least one impurity in which a porous material having at least one polyoxometalate-based material is contacted with the gaseous stream and the at least one impurity is passed through the porous material, producing a purified gaseous stream.

The publication EP 1 141 210 B1 discloses a method for bleaching laundry items or household surfaces wherein a washing agent which contains polyoxometalates is brought into contact with the soiled substrate. Air serves as the primary source of oxygen atoms for bleaching.

The publications EP 2 761 073 B1 and US2014/231363 A1 disclose a water-bearing domestic appliance having a container for receiving objects to be cleaned and at least one inner surface containing a catalytically active substance, said surface being disposed inside the domestic appliance, wherein the catalytically active substance is a polyoxometalate and the inner surface comes into contact with water to be cleaned during operation of the domestic appliance. Preferably, the polyoxometalate is tungstate and even more preferably the tungstate is modified by titanium.

The publication WO 2015/0787737 A1 discloses a water-conducting domestic appliance having a storage tank for storing a quantity of gray water and a treatment device for treating the gray water stored in the storage tank. The water-conducting domestic appliance is configured for determining the quantity of gray water stored in the storage tank and for operating the treatment device subject to the determined quantity of gray water stored in the storage tank.

The publications DE 10 2013 205 302 A1 and WO 2014/154432 A1 disclose a household appliance which comprises at least one catalytically effective substance in a surface, wherein the catalytically effective substance is a polyoxometalate that is comprised in an inner and/or outer surface of the household appliance, provided that the polyoxometalate is comprised at least in an outer surface of the household appliance if the household appliance is a water-bearing household appliance having a container for receiving objects to be cleaned.

The publication WO 2014/122225 A1 discloses the use of a heteropolyoxometalate of the Formula (I), (II) or (III)

A_{q+3}PV_{q}Z_{12-q}O₄₀ (I),

A₆P₂Z₁₈O₆₂ (II),

or

A₃PZ₄O₂₄ (III)

wherein Z is selected from Mo or W,
index q = 0, 1, 2 or 3, and
A is selected from one or more cations and comprises at least one cation selected from the group consisting of quaternary ammonium cations, quaternary phosphonium cations and tertiary sulfonium cations for providing self-cleaning, stripping, disinfecting, self-sanitizing, biocidal, antimicrobial, and/or deodorizing properties to at least part of a substrate or a surface of a substrate or to a coating or for decomposition and/or degradation of organic materials. In Formula (I), Z is preferably Mo and q = 2, and in Formula (III), Z is preferably W.

The publication EP 2 765 136 A1 discloses a heteropolyoxometalate of the Formula (I), (II) or (III)

A_{q+3}PV_{q}Z_{12-q}O₄₀ (I),

A₆P₂Z₁₈O₆₂ (II),

or

A₃PZ₄O₂₄ (III)

wherein Z is selected from Mo or W,
q is 1, 2 or 3, and
A is selected among one or more cations and comprises at least one quaternary ammonium cation with the proviso that the compounds [(n-C4H₉)₄N]₃PMo₁₂O₄₀ and [(n-C₆H₉)₄N]₃PMo₁₂O₄₀ are exempted. Most preferred are the heteropolyoxometalates [(n-C₄H₉)₄N]₃PW₄O₂₄ and [(n-C₆H₁₃)₄N]₃PW₄O₂₄.

The scientific paper of Jeffrey G. Lundin et al.: "Nature of Polyoxometalate Intramolecular Coordination to Quaternary Ammonium Salts from Paramagnetic Relaxation Enhancement", JOURNAL OF PHYSICAL CHEMISTRY C, vol. 120, no. 31, 15 July 2016, pages 17767-17776, discloses that the Wells-Dawson polyoxometalate a₂-K₈P₂W₁₇O₆₁(Ni^{2+.}OH₂) exhibits promising activity against chemical warfare agent (CWA) simulants when directly mixed into a commercial coating matrix and that despite numerous benefits of POMs as catalysts, POMs often exhibit limited solubility in organic polymer matrices such as commercial polyurethane coatings. Scientific investigations regarding the Wells-Dawson polyoxometalate a₂-K₈P₂W₁₇O₆₁(Ni^{2+.}OH₂) in combination with a series of amphilic alkyl ethoxy dimethyl quaternary ammonium salts are presented. No matrix is being used.

In view of this situation it is an object of the present invention to provide a household appliance with an improved system for removing volatile organic compounds (VOCs), in particular VOCs responsible for bad odours, and a method for operating this household appliance.

This object is achieved according to the invention with a household appliance and a method for operating the same, having the features of the corresponding independent claims. Preferred embodiments of the household appliance according to the invention are disclosed in the corresponding dependent claims. Preferred embodiments of the household appliance according to the invention correspond to preferred embodiments of the method according to the invention and vice versa, even if not explicitly stated herein.

The invention is thus directed to a household appliance, preferably a water-bearing household appliance, with an odour removal system containing odour removal means, wherein the odour removal system is provided in a circuit in which a gas or an aqueous liquid can be circulated through the odour removal means, wherein the odour removal means contains a polyoxometalate of the Formula (I) or (II),

A₃PZ₄O₂₄ (I),

A_{q+3}PV_{q}Z_{12-q}O₄₀ (II)

wherein Z is selected from Mo or W,
q is 0, 1 , 2 or 3, and
A is selected from one or more cations selected from the group consisting of (XR¹R²R³R⁴)⁺, wherein at least one of the groups R¹, R², R³, and R⁴ is an alkyl, alkyloxoalkyl or cycloalkyl group with at least five, preferably at least six and even more preferably at least seven, carbon atoms and wherein X is selected from nitrogen or phosphorus, and wherein the polyoxometalate is present in admixture with a binder which is selected from among acrylate-based binders and polyurethane-based binders, wherein the polyoxometalate is contained in a surface layer of the odour removal means and wherein the surface layer is porous and wherein the odour removal means thus comprises a mesh sieve that contains a polyoxometalate of the Formula (I) or (II).

The circuit involves in general the interior of the household appliance from which bad odours may arise.

In the household appliance of the present invention, the polyoxometalate is contained in a surface layer of the odour removal means. The surface layer has preferably a thickness of from 0.01 to 0.5 mm. It is moreover preferred that the surface layer has a polyoxometalate content in the range of from 1 to 50 wt%, based on the weight of the surface layer.

In the household appliance, the surface layer is porous. The term "porous" as used herein refers in particular to the presence of small holes that allow air or liquid to pass through. If the odour removal means are as such porous, the air or liquid may pass through the entire odour removal means. If only the surface layer is porous, air or liquid can essentially pass only through the surface layer. However, using the polyoxometalates described herein, an effective removal of odour can be achieved also in this manner.

Small holes can be present for example in a porous monolith, for example made from a polymeric or metallic foam, or in a mesh sieve.

In the case that only the surface layer is porous, turbulence creating means, for example suitably formed bodies, might be placed in the circuit, in particular within the odour removal means, in order to increase the flow through the porous surface layer containing the polyoxometalate.

In the claimed household appliance, the polyoxometalate is present in admixture with a binder which is selected from among acrylate-based binders and polyurethane-based binders. Also disclosed is that it possible that the polyoxometalate is in an admixture with silicone based binders.

Suitable acrylate-based binders are for example Gräsolin 2K-Acryllack from the company Gräsolin, WorléeCryl A1220 from the company Worlée Chemie, Bayhydrol® A145 from the company Covestro, a water-reducible, hydroxyfunctional polyacrylic dispersion, and Desmophen® A265BA from the company Covestro.

A suitable polyurethane (PUR)-based binder is for example ATCOAT Atrepur 340 from the company ATCOAT.

Suitable silicone resin-based binders are for example Silikopon® EF from the company Evonik, 2577 Low Voc from the company Dow Corning or Bluesil RES 991 from the company Bluesil.

The household appliance of the present invention contains in general a program control system. The program control system controls also a method for operating this household appliance. This method can be started automatically or upon the action of a user.

For an automatic conducting of the method for removing bad odour the program control system can be configured to conduct this method at prescribed occasions and/or prescribed time intervals. Another way of conducting it automatically is by using a gas sensor, which may be also termed "VOC sensor" or "odour sensor".

The odour removal system (which may be termed also "odour elimination system") can thus be activated by different actuators such as manual activation where the activation would occur whenever the user of the household appliance requires it. For this option it is in general required to include a form of activation, i.e. a control panel.

There might be also a cyclical activation via a timer, such that the odour removal system would work at time intervals, for example every 24 hours.

Another convenient activation means is automatic. Namely, the incorporation of a VOC sensor, for example in a dishwasher, would allow a total control based on VOCs measurements. This would allow to ensure that the concentration or amount of VOCs is kept always in an optimal range regardless of the specific use by a user and the type of food etc. It might also be envisaged that different admissible VOC levels can be set by different users of a household appliance.

Accordingly, the household appliance contains preferably a gas sensor. The VOC sensor is not limited as long as it can sense the presence of VOCs that are responsible for bad odours. The VOC sensor may thus be an optical, catalytic bead sensor or a piezoelectric sensor.

Preferably, the VOC sensor comprises at least two gas sensors that are different in respect of their reaction to different chemical characteristics of a predetermined gas or gas mixture.

The odor sensor can be disposed at different locations in the household appliance, the location generally depending on the type of the household appliance.

For example, a gas sensor might be provided within a refrigerator or a chamber thereof, or within a dishwasher.

If the household appliance is a laundry treatment appliance, a gas sensor may also be advantageously used.

In a dryer, the gas sensor is preferably disposed in the drying chamber and/or in the process air duct behind the drying chamber. If the dryer is a condensation dryer, it is recommended for example that the gas sensor is disposed behind a heat exchanger, in which the moisture in the moist hot process air can be condensed. This minimizes the influence of the moisture on the sensor signal of the gas sensor.

In a washing machine, the gas sensor is preferably disposed in the drum. This allows odorous substances to be registered before a washing process is implemented, it being possible then to configure this in respect of the type and quantity of any odorous substances present. When used in a washing machine, the gas sensor can be protected optionally by way of a cover from damaging influences due to water or wash liquor before water or wash liquor is introduced.

In the household appliance of the present invention, the odour removal system is provided in a circuit in which a gas or an aqueous liquid can be circulated through odour removal means. The circuit allows a repeated contact of the gas or aqueous liquid and thus of the odour creating compounds with the polyoxometalate.

The gas or the aqueous liquid should thus be preferably circulated through the circuit. Preferably, in the household appliance, the odour removal system thus comprises stream generating means for transporting a gas and or a liquid to the odour removal means. The stream generating means is for example a blower.

In order to have a directed gas or liquid stream it is useful to provide the odour removal system with a suitable duct system that allows a close contact between the gas or liquid stream and the odour removal means.

In the present invention, the polyoxometalate is preferably a polyoxometalate of the Formula (I'), (II') or (III'),

A₃PW₄O₂₄ (I'),

A_{q+3}PV_{q}Mo_{12-q}O₄₀ (II'),

or

A_{q+3}PV_{q}W_{12-q}O₄₀ (III'),

wherein q is 0, 1 or 2.

In a favourable embodiment, the polyoxometalate is

A_{q+3}PV_{q}Mo_{12-q}O₄₀ (II'),

or

A_{q+3}PV_{q}W_{12-q}O₄₀ (III'),

wherein q is 1 or 2.

In a particular preferred embodiment of the household appliance, the polyoxometalate is

A₃PW₄O₂₄ (I')

A household appliance is preferred, wherein the cation is selected from the group consisting of (NR¹R²R³R⁴)⁺, wherein at least one of the groups R¹, R², R³, and R⁴ is a substituted or nonsubstituted alkyl, alkyloxoalkyl or cycloalkyl group with at least eight carbon atoms.

In a preferred embodiment of the household appliance, the cation is selected from the group consisting of (PR¹R²R³R⁴)⁺, wherein at least one of the groups R¹, R², R³, and R⁴ is a substituted or nonsubstituted alkyl, alkyloxoalky or cycloalkyl group with at least eight carbon atoms.

It is moreover preferred that the polyoxometalate contains different cations. In this regard it is more preferable that the polyoxometalate contains different cations of the formula (XR¹R²R³R⁴)⁺, wherein at least one of the groups R¹, R², R³, and R⁴ has at least ten carbon atoms. It is even more preferable that the cations have the formula (NR¹R²R³R⁴)⁺ and that the different cations have groups R¹, R², R³, or R⁴ with eight and ten carbon atoms. An advantageous mixture of cations is for example Aliquat 336 (Stark's catalyst) wherein the cations contain both octyl and decyl chains, i.e. alkyl chains with eight and ten carbon atoms, respectively.

Also disclosed is the production of a household appliance according to the invention, wherein the odour removal means containing a polyoxometalate can be obtained for example by dip-coating a carrier material, for example a suitable mesh sieve, into a liquid containing one of the aforementioned binders and the polyoxometalate. This can be done for example by immersion of the carrier material to be coated into a coating solution at a constant speed, for example 100 mm/min. After maintaining it immersed for example for 10 minutes, it might be pulled out using a controlled speed.

The household appliance is not limited. However, the household appliance is preferably a water-bearing household appliance. In general, a water-bearing household appliance is a household appliance during the operation of which water is used or during the operation of which water can occur. The household appliance of the present invention might be provided with a container for storing or treating goods, for example food or items to be cleaned. The items to be cleaned can be, in particular, tableware or laundry items. In a preferred embodiment, the water-bearing household appliance is a refrigerator, dishwasher or a laundry treatment device. In another preferred embodiment, the water-bearing household appliance is a laundry treatment device belonging to the group consisting of a washing machine and a washer-dryer. The term "household appliance" must however be understood broadly. Household appliances according to the invention are thus for example washing machines, dryers, dishwashers, fridges and coolers, hoods, ovens, microwaves, coffee machines, irons and steam irons, vacuum cleaners, water cleaners, water heaters humidifiers and air conditioners.

Due to the broad meaning of household appliance, the terms "odour removal system" and "odour removal means" must also be understood broadly. The points where bad odours may occur will in general depend on the type of household appliance. Accordingly, the odour removal system and means will be in general adapted to the type of the household appliance.

The inventive household appliance enables for example the water or air in a water-bearing household appliance to be treated in an efficient, economical and environmentally-friendly way such that organic substances creating bad odour are decomposed and that the odour state is improved. Preferably, odor in the household appliance can be avoided.

In the household appliance of the present invention, in particular in the case of a water-bearing household appliance, it is preferable that the odour removal means comes into close contact with the water or air to be deodorized. The contact is usually necessary, since organic substances that are responsible for the odour in the household appliance are oxidized due to the contact with the polyoxometalate contained in the odour removal means and are thereby decomposed.

In the present invention, the property of the polyoxometalates, and in particular of the specific polyoxometalates as described herein which do not need an activation by radiation, as oxidation catalyst or as oxidation agent is utilized. The effects of the polyoxometalate can be two-fold, the extent of these effects being dependent on the specific polyoxometalate used.

For example, a cause of odour removal or elimination might be an oxidation of organic substances by the polyoxometalate itself when they are in direct contact. Then the polyoxometalate would be itself reduced.

More importantly, however, the polyoxometalate containing surface is catalytically effective in oxidation reactions. In the oxidation reaction, the polyoxometalate serves, in general, as an oxidation catalyst which cooperates with an oxidizing agent. The oxidizing agent is not limited according to the invention. Preferably, an oxygen-containing oxidizing agent is used. Oxygen, inorganic or organic peroxides and/or ozone are particularly preferred as oxidizing agents. Oxygen is again particularly preferred amongst them as an oxidizing agent since an additional input of possibly harmful or interfering substances can be avoided. Since often, air is to be deodorized in the odour removal system described herein, the air itself is preferably used as a source of oxygen. However, the oxygen may be present, for example, dissolved in water, especially if an aqueous liquid is to be deodorized. Furthermore, by means of a corresponding movement of the water, mixing of air and water can take place, for example, for the formation of air bubbles in the water and an air-water mixture of this type can be brought into contact with the polyoxometalate-containing odour removal means, the atmospheric oxygen preferably serving as the oxidizing agent. Particularly preferably, an air infeed element provides a sufficient quantity of oxygen in an aqueous liquid to be deodorized.

The polyoxometalates (POM) discussed herein can remove bad odours due to three different effects. Namely a catalytic effect, wherein it is of particular advantage that the POM can oxidize some organic substances creating bad odour. After the reduction of the POM, its reduced form can be regenerated by oxygen. During this process, super-oxide ions O₂^{-.} are generated as secondary species. The super-oxide ions are also a very efficient oxidant. Moreover, OH-radicals can be formed as a further strong oxidant.

In another embodiment, a peroxide or ozone is used as the oxidizing agent. This requires however a suitable supply of peroxide or ozone to the odour removal means. Ozone may be preferred as an oxidizing agent in a household appliance having an ozone generator. Such a household appliance preferably has also an ozone removal device. The polyoxometalate-containing odour removal system is then arranged such that it is provided with ozone.

In a preferred household appliance of the present invention, in particular a water-bearing household appliance, and more particularly a washing machine or a wash-dryer, the odour removal means containing the polyoxometalate is preferably arranged as a separate system, i.e. the air/water duct comprising the odour removal means is provided in a part of the circuit which can be separated from the air and/or water ducts that are used for the usual functioning of the household appliance. Preferably, the user of the household appliance of the present invention can specify, by means of selection buttons, in which manner a process should be performed.

As discussed above, in the presence of an oxidizing agent such as oxygen, hydrogen peroxide or ozone, oxygen radicals (or oxygen-containing radicals, herein referred altogether as "oxygen radicals") form in the polyoxometalate-containing odour removal means of the household appliance. When these highly reactive oxygen radicals come into contact with organic substances creating bad odour, an oxidation reaction takes place which leads to the decomposition of the organic substances. In this way, bad odours are removed and the establishment of bad odours is counteracted.

In order to enable a continuous oxidation reaction, a sufficient level of mobility of the oxidizing species, for example, of oxygen radicals which have been generated in the polyoxometalate-containing odour removal means acting as an oxidation catalyst is preferable. This could be for example achieved by recirculating an aqueous medium with the aid of a pump or by recirculating air with the aid of a blower.

In the household appliance of the present invention, if the polyoxometalate is present in a surface layer of the odour removal means, it is preferred that the polyoxometalate containing surface layer has a thickness of from 0.01 to 1.5 mm, preferably a thickness of from 0.01 to 0.5 mm, more preferably of from 0.02 to 1 mm, and even more preferably of from 0.05 to 0.5 mm.

When the polyoxometalate is used together with an acrylate-based binder, a polyurethane-based binder or a silicone resin-based binder, the coating thickness is preferably in the range of from 10 nm to 500 µm and more preferably in the range of from 20 nm to 200 µm.

It is moreover preferred that in the household appliance the surface layer has a polyoxometalate content in the range of from 1 to 50 wt%, more preferably in the range of from 3 to 25 wt%, and even more preferably in the range of from 5 to 20 wt%, based on the weight of the surface layer.

It is often advantageous if as much as possible polyoxometalate is present in the polyoxometalate containing odour removal system, since its effect is in general restricted to the surface.

The surface layer containing polyoxometalate can be created in any way, provided the effect, and in particular catalytic effect, according to the invention is possible. For example, said surface can be created by forming a polyoxometalate-containing film or, for example, by placing polyoxometalate particles at the surface of a porous material using in both cases one of the binders discussed above. The production thereof generally depends on the location of the surface and the manner in which the odour removal system in the household appliance is being used.

In order to maintain the polyoxometalate at the surface and to prevent dissolution into a surrounding liquid or gaseous medium or any other depletion because of the contact with a surrounding medium, it is important to use the specific cations described herein. Organic ions with a long chain are especially suitable as described herein. Particularly preferred examples thereof are the methyltrioctylammonium and tributyltetradecylphosphonium cations. It is noted that an additional deodorizing effect might be achieved by the use of the cations described herein.

The polyoxometalate described herein is a salt which can be bound by means of suitable binder systems on various surfaces. In addition, the polyoxometalate may be admixed with the remainder of the material in the surface, ahead of the manufacture of the odour removal system, for example an organic polymeric material comprising a polyamide or a polyalkylene, for example polypropylene.

Moreover, it is possible to produce a foil wherein the polyoxometalate is combined with a suitable carrier material and the binder, such that only a comparatively small amount of polyoxometalate might be required in order to cover a large surface area. Such foils can be applied to a basic part of the odour removal means for example by glueing or meltbonding. Moreover such foils may be placed directly in an injection mould and thus be directly utilized for the manufacture of the odour removal parts of the household appliance.

The invention is moreover directed to a method for operating a household appliance with an odour removal system containing odour removal means, wherein the odour removal system is provided in a circuit in which a gas or an aqueous liquid can be circulated through the odour removal means, and wherein the odour removal means contains a polyoxometalate of the Formula (I) or (II),

A₃PZ₄O₂₄ (I),

A_{q+3}PV_{q}Z_{12-q}O₄₀ (II)

wherein Z is selected from Mo or W,
q is 0, 1, 2 or 3, and
A is selected from one or more cations selected from the group consisting of (XR¹R²R³R⁴)⁺, wherein at least one of the groups R¹, R², R³, and R⁴ is an alkyl, alkyloxoalkyl or cycloalkyl group that may contain at least one heteroatom selected among O, S, N or P, with at least five carbon atoms and wherein X is selected from nitrogen or phosphorus, and wherein the polyoxometalate is present in admixture with a binder which is selected from among acrylate-based binders and polyurethane-based binders, wherein the polyoxometalate is contained in a surface layer of the odour removal means and wherein the surface layer is porous, and wherein the gas or aqueous liquid is circulated through the odour removal means and wherein the odour removal means comprises a mesh sieve that contains a polyoxometalate of the Formula (I) or (II).

The invention has the advantage that an easy to deodorize household appliance is made available in a simple and cost-effective manner.

A particular advantage of the use of the polyoxometalates described herein in an odour removal system lies therein that a good odour state can be provided, i.e. bad odours are removed, for years without any required additional activation or additional energy usage. Furthermore, in embodiments of the invention no addition reagents need to be dosed in the odour removal system and an activation of the catalyst, for example, by UV radiation can be dispensed with.

The invention allows moreover that the growth of microorganisms is reduced or even avoided since microorganisms are usually present in air or aqueous liquids.

In an embodiment of the present invention wherein the household appliance is a household appliance for storing food, the invention allows to improve the conservation of food thanks to the removal of ethylene.

In the following a preferred embodiment of the invention will be described in more detail by reference to Figures 1 to 3 of the drawing attached.
- Fig. 1: is a schematic representation of relevant parts of a washing machine as a first embodiment of the household appliance according to the invention.
- Fig. 2: shows the relevant parts of a refrigerator as a second embodiment of the household appliance according to the invention, wherein air to be deodorized is passed through odour removal means.
- Fig. 3: shows the relevant parts of another refrigerator as a third embodiment of the household appliance according to the invention, wherein air to be deodorized is passed along a porous surface layer of the odour removal means.

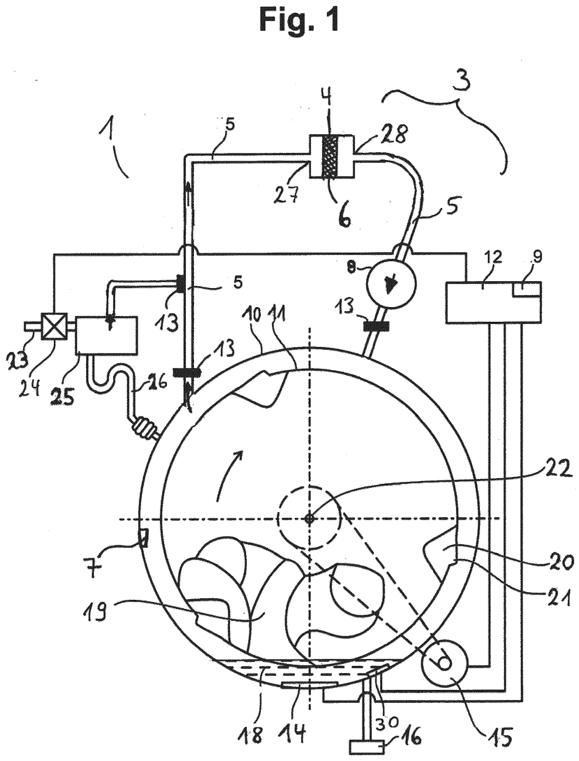

Fig. 1 is a schematic representation of relevant parts of an embodiment of the household appliance which is here configured as a washing machine as non-limiting example.

The washing machine 1 of this embodiment has an outer tub 10 in which a drum 11 is rotatably mounted and can be driven by a drive motor 15. For ergonomic reasons, the rotation axis 22 of the drum 11 is oriented upwardly out of the horizontal by a small angle, so that easier access to, and inspection of the interior of the drum 11 is provided. With this arrangement, in cooperation with specially formed laundry agitators 20 and scooping devices 21 for the washing liquor 18 at the internal surface of the drum jacket, intensification of the flow of washing liquor 18 through the laundry items 19 can be achieved.

The washing machine 1 also has a water feed system which comprises a water connection fixture for the domestic water supply 23, an electrically controllable valve 24 and a feed pipe 26 which extends to the outer tub 10. The water is fed via a detergent dispenser tray 25 from which the water is able to transport washing agent portions to the outer tub 10.

A heating device 14 is also provided in the outer tub 10. The valve 24 and the heating device 14 can be controlled by a program control system 12 depending on a program execution plan which can be linked to a time program and/or to the reaching of particular measured values of parameters such as the liquor level, the liquor temperature, the rotary speed of the drum 11, etc. within the washing machine 1. 16 denotes a pump for the liquid, in particular washing liquor 18, in the outer tub 10.

The outer tube 10 is part of a circuit 5 for, in this embodiment, air to be deodorized in an odour removal system 3 which contains as odour removal means 4 in this embodiment a suitably fixed mesh sieve 6. The mesh sieve contains a polyoxometalate. The polyoxometalate of the odour removal means 4 is in particular A₃PW₄O₂₄, wherein A is either the cation methyltrioctylammonium or the cation tributyltetradecylphosphonium, or a mixture thereof. 27 denotes the entrance to the odour removal means 4 and 28 denotes the exit from the odour removal means 4. The air to be deodorized is circulated in the circuit 5 by means of a blower 8 as stream generating means.

In the embodiment of Fig. 1, the detergent dispenser tray 25 is also connected with the odour removal system 4. The odour removal system 4 can be separated from the outer tub 10 and the detergent dispenser tray 25 by means of closing devices 13 which allow to close here the circuit 5 for the passage of air.

Although not shown here it is possible to supplement the odour removal means 4 with an oxidant in order to facilitate the deodorization of the air provided in the circuit 5.

An optic display device 9 allows the display of program parameters and a program status. In this embodiment, the necessity and/or the actual operation of an odour removal program in the washing machine 1 can be displayed. In a method to operate the washing machine 1 such that an odour removal program is carried out, the closing devices 13 are opened and the blower 8 is started. Air stemming from the outer tube 10 and thus also from the laundry drum 11, as well as air stemming from the feed pipe 26 and the detergent dispenser tray 25 is then passed on to the odour removal means 4 where it is deodorized.

A gas sensor 7 is provided in the washing machine 1 in order to provide information on the necessity of carrying out an odour removal program. In the washing machine 1 of this embodiment it is possible to start an odour removal program automatically, for example based on the signals which are provided from the gas sensor 7 to the program control system 12, or by carrying it out cyclically, i.e. a cyclical activation of the deodorization, via a timer. The odour removal system 4 would then work for example at time intervals, for example every 24 hours.

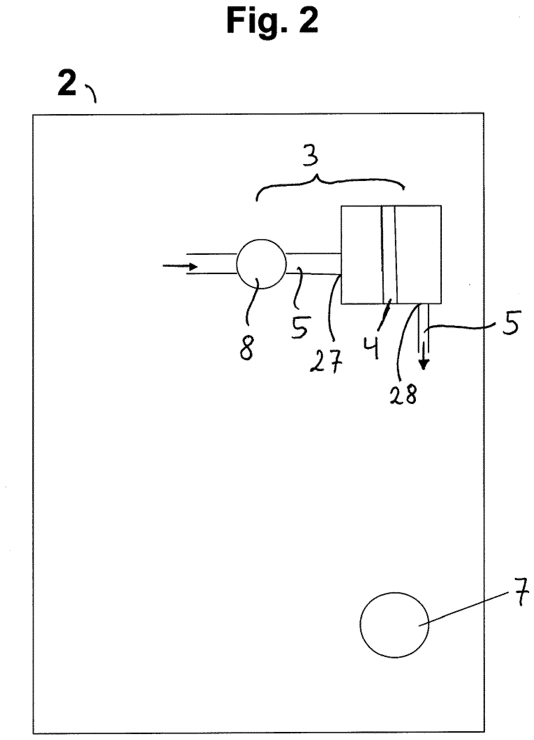

Fig. 2 shows the relevant parts of a refrigerator 2 as a second embodiment of the household appliance, wherein air to be deodorized is passed through the entire odour removal means 4.

Fig. 2 shows the odour removal system 3 as a part of a circuit 5 in which air from the storing area of the interior of the refrigerator can be circulated through the odour removal system 3. In order to allow for an automatic start of an odour removal program or to provide a user with information on a manual start of an odour removal program, a gas sensor 7 is provided in the storing area.

The odour removal system 3 which is used in refrigerator 2 shown in Fig. 2 contains a blower 8 for generating a stream of air in the direction of the odour removal means 4 which is here a ceramic filter or active carbon each of which coated with a polyoxometalate. The air enters the odour removal means 4 at an entrance 27 and leaves the odour removal means 4 at an exit 28. In the configuration of the odour removal means 4 all air is required to pass through the entire odour removal means 4.

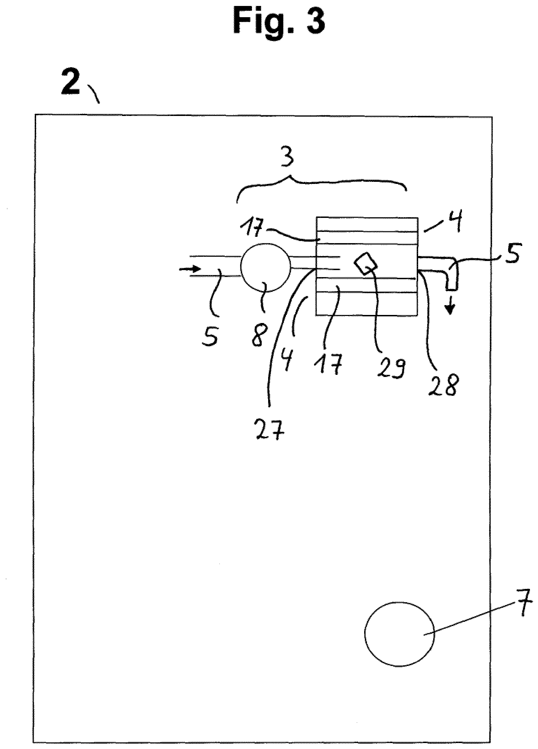

Fig. 3 shows the relevant parts of another refrigerator 2 as a third embodiment of the household appliance, wherein air to be deodorized is passed through the odour removal means 4 in that it is conducted along a porous surface layer 17 of the odour removal means 4.

Fig. 3 shows only the odour removal system 3 as a part of a circuit 5 in which air from the storing area of the interior of the refrigerator can be circulated through the odour removal system 3, and a gas sensor 7. Namely, in order to allow for an automatic start of an odour removal program or to provide a user with information on a manual start of an odour removal program, a gas sensor 7 is provided in the storing area of the refrigerator. The storing area is not shown in more detail.

The odour removal system 3 which is used in refrigerator 2 shown in Fig. 3 contains a blower 8 for generating a stream of air in the direction of the odour removal means 4 which is here a plastic body with a porous surface layer 17 containing a polyoxometalate. The air enters the odour removal means 4 at an entrance 27 and leaves the odour removal means 4 at an exit 28. In the configuration of the odour removal means 4 not all air is required to pass through the entire odour removal means 4 since the air can in principle also flow from the entrance 27 to the exit 28. However, in order to create a turbulent flow of the air, i.e. turbulence, suitably formed turbulence creating means are placed with the odour removal means 4. The air can thus come into close contact with the polyoxometalate in the porous surface layer 17 of the odour removal means 4.

### REFERENCE SIGNS

- 1: Household appliance, water-bearing household appliance, washing machine
- 2: Refrigerator
- 3: Odour removal system
- 4: Odour removal means
- 5: Circuit (for air or liquid to be deodorized)
- 6: Mesh sieve
- 7: Gas sensor
- 8: Stream generating means, blower
- 9: Acoustic and/or optic display device
- 10: (Outer) tub
- 11: Laundry drum
- 12: Program control system
- 13: Closing device
- 14: Heating device
- 15: Drive motor
- 16: Pump
- 17: Surface layer containing polyoxometalate
- 18: Aqueous liquid, washing liquor
- 19: Laundry items
- 20: Laundry agitators
- 21: Scooping devices
- 22: Rotation axis of the drum
- 23: Domestic water supply
- 24: Valve
- 25: Detergent dispenser tray
- 26: Feed pipe for (tensed containing) water, washing liquor
- 27: Entrance to odour removal means
- 28: Exit from odour removal means
- 29: Turbulence creating means
- 30: Water level sensor

## Claims

1. A household appliance (1,2) with an odour removal system (3) containing odour removal means (4), **characterized in that** the odour removal system (3) is provided in a circuit (5) in which a gas or an aqueous liquid can be circulated through the odour removal means (4), wherein the odour removal means (4) contains a polyoxometalate of the Formula (I) or (II),
A₃PZ₄O₂₄ (I),
A_{q+3}PV_{q}Z_{12-q}O₄₀ (II),
wherein Z is selected from Mo or W,
q is 0, 1, 2 or 3, and
A is selected from one or more cations selected from the group consisting of (XR¹R²R³R⁴)⁺, wherein at least one of the groups R¹, R², R³, and R⁴ is an alkyl, alkyloxoalkyl or cycloalkyl group that may contain at least one heteroatom selected among O, S, N or P, with at least five carbon atoms and wherein X is selected from among nitrogen or phosphorus, and wherein the polyoxometalate is present in admixture with a binder which is selected from among acrylate-based binders and polyurethane-based binders, wherein the polyoxometalate is contained in a surface layer (17) of the odour removal means (4), wherein the surface layer (17) is porous and wherein the odour removal means (4) comprises a mesh sieve (6) that contains a polyoxometalate of the Formula (I) or (II).

2. Household appliance (1,2) according to claim 1, wherein the surface layer (17) has a thickness of from 0.01 to 0.5 mm.

3. Household appliance (1,2) according to claim 1 or 2, wherein the surface layer (17) has a polyoxometalate content in the range of from 1 to 50 wt%, based on the weight of the surface layer (17).

4. Household appliance (1,2) according to any of claims 1 to 3, wherein the household appliance (1,2) contains a gas sensor (7).

5. Household appliance (1,2) according to any of claims 1 to 4, wherein the odour removal system (3) comprises stream generating means (8) for transporting a gas and or a liquid to the odour removal means (4).

6. Household appliance (1,2) according to any of claims 1 to 5, wherein the polyoxometalate has the Formula (I'),
A₃PW₄O₂₄ (I').

7. Household appliance (1) according to any of claims 1 to 6, wherein the cation is selected from the group consisting of (NR¹R²R³R⁴)⁺, wherein at least one of the groups R¹, R², R³, and R⁴ is a substituted or nonsubstituted alkyl, alkyloxoalkyl or cycloalkyl group with at least eight carbon atoms.

8. Household appliance (1) according to any of claims 1 to 7, wherein the cation is selected from the group consisting of (PR¹R²R³R⁴)⁺, wherein at least one of the groups R¹, R², R³, and R⁴ is a substituted or nonsubstituted alkyl, alkyloxoalky or cycloalkyl group with at least eight carbon atoms.

9. Household appliance (1,2) according to any of claims 1 to 8, wherein the household appliance is a dishwasher, a refrigerator, or a laundry treatment device.

10. A method for operating a household appliance (1) with an odour removal system (3) containing odour removal means (4), wherein the odour removal system (3) is provided in a circuit (5) in which a gas or an aqueous liquid can be circulated through the odour removal means (4), and wherein the odour removal means (4) contains a polyoxometalate of the Formula (I) or (II),
A₃PZ₄O₂₄ (I),
A_{q+3}PV_{q}Z_{12-q}O₄₀ (II)
wherein Z is selected from Mo or W,
q is 0, 1 , 2 or 3, and
A is selected from one or more cations selected from the group consisting of (XR¹R²R³R⁴)⁺, wherein at least one of the groups R¹, R², R³, and R⁴ is an alkyl, alkyloxoalkyl or cycloalkyl group that may contain at least one heteroatom selected among O, S, N or P, with at least five carbon atoms and wherein X is selected from nitrogen or phosphorus, and wherein the polyoxometalate is present in admixture with a binder which is selected from among acrylate-based binders and polyurethane-based binders, wherein the polyoxometalate is contained in a surface layer (17) of the odour removal means (4) and wherein the surface layer (17) is porous,
**characterized in that** the gas or aqueous liquid is circulated through the odour removal means (4), and wherein the odour removal means (4) comprises a mesh sieve (6) that contains a polyoxometalate of the Formula (I) or (II).

## Patentansprüche

1. Haushaltsgerät (1, 2) mit einem Geruchsbeseitigungssystem (3), das ein Geruchsbeseitigungsmittel (4) enthält, **dadurch gekennzeichnet, dass** das Geruchsbeseitigungssystem (3) in einem Kreislauf (5) vorgesehen ist, in welchem ein Gas oder eine wässrige Flüssigkeit durch das Geruchsbeseitigungsmittel (4) hindurch umgewälzt werden kann, wobei das Geruchsbeseitigungsmittel (4) ein Polyoxometallat der Formel (I) oder (II) enthält,
A₃PZ₄O₂₄ (I),
A_{q+3}PV_{q}Z_{12-qO40} (II),
wobei Z aus Mo oder W ausgewählt ist,
q gleich 0, 1, 2 oder 3 ist, und
A aus einem oder mehreren Kationen ausgewählt ist, die aus der Gruppe ausgewählt sind, welche aus (XR¹R²R³R⁴)⁺ besteht, wobei wenigstens eine der Gruppen R¹, R², R³ und R⁴ eine Alkyl-, Alkyloxoalkyl- oder Cycloalkylgruppe, welche wenigstens ein aus O, S, N oder P ausgewähltes Heteroatom enthalten kann, mit mindestens fünf Kohlenstoffatomen ist, und wobei X aus Stickstoff oder Phosphor ausgewählt ist, und wobei das Polyoxometallat in Mischung mit einem Bindemittel vorhanden ist, welches aus acrylatbasierten Bindemitteln und polyurethanbasierten Bindemitteln ausgewählt ist, wobei das Polyoxometallat in einer Oberflächenschicht (17) des Geruchsbeseitigungsmittels (4) enthalten ist, wobei die Oberflächenschicht (17) porös ist und wobei das Geruchsbeseitigungsmittel (4) ein Maschensieb (6) umfasst, welches ein Polyoxometallat der Formel (I) oder (II) enthält.

2. Haushaltsgerät (1, 2) nach Anspruch 1, wobei die Oberflächenschicht (17) eine Dicke von 0,01 bis 0,5 mm aufweist.

3. Haushaltsgerät (1, 2) nach Anspruch 1 oder 2, wobei die Oberflächenschicht (17) einen Gehalt an Polyoxometallat im Bereich von 1 bis 50 Gew.-% aufweist, bezogen auf das Gewicht der Oberflächenschicht (17).

4. Haushaltsgerät (1, 2) nach einem der Ansprüche 1 bis 3, wobei das Haushaltsgerät (1, 2) einen Gassensor (7) enthält.

5. Haushaltsgerät (1, 2) nach einem der Ansprüche 1 bis 4, wobei das Geruchsbeseitigungssystem (3) Strömungserzeugungsmittel (8) zum Transportieren eines Gases und/oder einer Flüssigkeit zu dem Geruchsbeseitigungsmittel (4) umfasst.

6. Haushaltsgerät (1, 2) nach einem der Ansprüche 1 bis 5, wobei das Polyoxometallat die Formel (I') hat,
A₃PW₄O₂₄ (I').

7. Haushaltsgerät (1) nach einem der Ansprüche 1 bis 6, wobei das Kation aus der Gruppe ausgewählt ist, welche aus (NR¹R²R³R⁴)⁺ besteht, wobei wenigstens eine der Gruppen R¹, R², R³ und R⁴ eine substituierte oder nicht substituierte Alkyl-, Alkyloxoalkyl- oder Cycloalkylgruppe mit mindestens acht Kohlenstoffatomen ist.

8. Haushaltsgerät (1) nach einem der Ansprüche 1 bis 7, wobei das Kation aus der Gruppe ausgewählt ist, welche aus (PR¹R²R³R⁴)⁺ besteht, wobei wenigstens eine der Gruppen R¹, R², R³ und R⁴ eine substituierte oder nicht substituierte Alkyl-, Alkyloxoalkyl- oder Cycloalkylgruppe mit mindestens acht Kohlenstoffatomen ist.

9. Haushaltsgerät (1, 2) nach einem der Ansprüche 1 bis 8, wobei das Haushaltsgerät eine Geschirrspülmaschine, ein Kühlschrank oder ein Wäschebehandlungsgerät ist.

10. Verfahren zum Betreiben eines Haushaltsgeräts (1) mit einem Geruchsbeseitigungssystem (3), das ein Geruchsbeseitigungsmittel (4) enthält, wobei das Geruchsbeseitigungssystem (3) in einem Kreislauf (5) vorgesehen ist, in welchem ein Gas oder eine wässrige Flüssigkeit durch das Geruchsbeseitigungsmittel (4) hindurch umgewälzt werden kann, und wobei das Geruchsbeseitigungsmittel (4) ein Polyoxometallat der Formel (I) oder (II) enthält,
A₃PZ₄O₂₄ (I),
A_{q+3}PV_{q}Z_{12-q}O₄₀ (II),
wobei Z aus Mo oder W ausgewählt ist,
q gleich 0, 1, 2 oder 3 ist, und
A aus einem oder mehreren Kationen ausgewählt ist, die aus der Gruppe ausgewählt sind, welche aus (XR¹R²R³R⁴)⁺ besteht, wobei wenigstens eine der Gruppen R¹, R², R³ und R⁴ eine Alkyl-, Alkyloxoalkyl- oder Cycloalkylgruppe, welche wenigstens ein aus O, S, N oder P ausgewähltes Heteroatom enthalten kann, mit mindestens fünf Kohlenstoffatomen ist, und wobei X aus Stickstoff oder Phosphor ausgewählt ist, und wobei das Polyoxometallat in Mischung mit einem Bindemittel vorhanden ist, welches aus acrylatbasierten Bindemitteln und polyurethanbasierten Bindemitteln ausgewählt ist, wobei das Polyoxometallat in einer Oberflächenschicht (17) des Geruchsbeseitigungsmittels (4) enthalten ist und wobei die Oberflächenschicht (17) porös ist,
**dadurch gekennzeichnet, dass** das Gas oder die wässrige Flüssigkeit durch das Geruchsbeseitigungsmittel (4) hindurch umgewälzt wird, und wobei das Geruchsbeseitigungsmittel (4) ein Maschensieb (6) umfasst, welches ein Polyoxometallat der Formel (I) oder (II) enthält.

## Revendications

1. Appareil ménager (1, 2) comprenant un système (3) d'élimination des odeurs contenant un moyen (4) d'élimination des odeurs, **caractérisé en ce que** le système (3) d'élimination des odeurs est prévu dans un circuit (5) dans lequel on peut faire circuler un gaz ou un liquide aqueux via le moyen (4) d'élimination des odeurs ; dans lequel le moyen (4) d'élimination des odeurs contient un polyoxométallate répondant à la formule (I) ou (II) :
A₃PZ₄O₂₄ (I) ;
A_{q+3}PV_{q}Z_{12-q}O₄₀ (II) ;
dans laquelle Z est choisi parmi Mo ou W ;
q est égal à 0, 1, 2 ou 3 ; et
A est choisi parmi un ou plusieurs cations choisis parmi le groupe constitué par (XR¹R²R³R⁴)⁺, dans lequel au moins un des groupes R¹, R², R³ et R⁴ représente un groupe alkyle, un groupe alkyloxoalkyle ou un groupe cycloalkyle qui peut contenir au moins un hétéroatome choisi parmi un atome d'oxygène, un atome de soufre, un atome d'azote ou un atome de phosphore, comprenant au moins cinq atomes de carbone, et dans lequel X est choisi parmi un atome d'azote ou un atome de phosphore ; et dans lequel le polyoxométallate est présent en mélange avec un liant qui est choisi parmi des liants à base d'acrylate et des liants à base de polyuréthane ; dans lequel le polyoxométallate est contenu dans une couche superficielle (17) du moyen (4) d'élimination des odeurs ; dans lequel la couche superficielle (17) est poreuse ; et dans lequel le moyen (4) d'élimination des odeurs comprend un tamis à mailles (6) qui contient un polyoxométallate répondant à la formule (I) ou (II).

2. Appareil ménager (1, 2) selon la revendication 1, dans lequel la couche superficielle (17) possède une épaisseur de 0,01 à 0,5 mm.

3. Appareil ménager (1, 2) selon la revendication 1 ou 2, dans lequel la couche superficielle (17) possède une teneur en polyoxométallate dans la plage de 1 à 50 % en poids, basés sur le poids de la couche superficielle (17).

4. Appareil ménager (1, 2) selon l'une quelconque des revendications 1 à 3, dans lequel l'appareil ménager (1, 2) contient un détecteur de gaz (7).

5. Appareil ménager (1, 2) selon l'une quelconque des revendications 1 à 4, dans lequel le système (3) d'élimination des odeurs comprend un moyen de génération de vapeur (8) destiné à transporter un gaz et/ou un liquide en direction du moyen (4) d'élimination des odeurs.

6. Appareil ménager (1, 2) selon l'une quelconque des revendications 1 à 5, dans lequel le polyoxométallate répond à la formule (I') :
A₃PW₄O₂₄ (I').

7. Appareil ménager (1, 2) selon l'une quelconque des revendications 1 à 6, dans lequel le cation est choisi parmi le groupe constitué par (NR¹R²R³R⁴)⁺, dans lequel au moins un des groupes R¹, R², R³ et R⁴ représente un groupe alkyle, un groupe alkyloxoalkyle ou un groupe cycloalkyle substitué ou non substitué, comprenant au moins huit atomes de carbone.

8. Appareil ménager (1, 2) selon l'une quelconque des revendications 1 à 7, dans lequel le cation est choisi parmi le groupe constitué par (PR¹R²R³R⁴)⁺, dans lequel au moins un des groupes R¹, R², R³ et R⁴ représente un groupe alkyle, un groupe alkyloxoalkyle ou un groupe cycloalkyle substitué ou non substitué, comprenant au moins huit atomes de carbone.

9. Appareil ménager (1, 2) selon l'une quelconque des revendications 1 à 8, dans lequel l'appareil ménager est un lave-vaisselle, un réfrigérateur ou un dispositif de traitement de la lessive.

10. Procédé permettant de faire fonctionner un appareil ménager (1) comprenant un système (3) d'élimination des odeurs contenant un moyen (4) d'élimination des odeurs, dans lequel le système (3) d'élimination des odeurs est prévu dans un circuit (5) dans lequel on peut faire circuler un gaz ou un liquide aqueux via le moyen (4) d'élimination des odeurs ; dans lequel le moyen (4) d'élimination des odeurs contient un polyoxométallate répondant à la formule (I) ou (II) :
A₃PZ₄O₂₄ (I) ;
A_{q+3}PV_{q}Z_{12-q}O₄₀ (II) ;
dans laquelle Z est choisi parmi Mo ou W ;
q est égal à 0, 1, 2 ou 3 ; et
A est choisi parmi un ou plusieurs cations choisis parmi le groupe constitué par (XR¹R²R³R⁴)⁺, dans lequel au moins un des groupes R¹, R², R³ et R⁴ représente un groupe alkyle, un groupe alkyloxoalkyle ou un groupe cycloalkyle qui peut contenir au moins un hétéroatome choisi parmi un atome d'oxygène, un atome de soufre, un atome d'azote ou un atome de phosphore, comprenant au moins cinq atomes de carbone, et dans lequel X est choisi parmi un atome d'azote ou un atome de phosphore ; et dans lequel le polyoxométallate est présent en mélange avec un liant qui est choisi parmi des liants à base d'acrylate et des liants à base de polyuréthane ; dans lequel le polyoxométallate est contenu dans une couche superficielle (17) du moyen (4) d'élimination des odeurs ; dans lequel la couche superficielle (17) est poreuse ;
**caractérisé en ce qu'**on fait circuler le gaz ou le liquide aqueux via le moyen (4) d'élimination des odeurs ; et dans lequel le moyen (4) d'élimination des odeurs comprend un tamis à mailles (6) qui contient un polyoxométallate répondant à la formule (I) ou (II).
